# EUROPEAN PATENT APPLICATION

(11) **EP 2 763 273 A1**
(43) Date of publication of application: **06.08.2014**
(21) Application number: 13153568.4
(22) Date of filing: 01.02.2013
(51) Int. Cl.: H02J 7/00, G06F 1/32

(54) **Connecting auxiliary battery charger IC to mobile chipset**

(71) Applicant: ST-Ericsson SA, 1228 Plan-les-Ouates (CH)
(72) Inventor: Jäntti, Joni, 90540 Oulu (FI)
(74) Representative: Hutchinson, Thomas Owen

(57) **Abstract**

A method and apparatus for connecting an auxiliary charger IC (52) to a mobile platform chipset (52) so that charger connection (64) wakes-up the power management unit (50), operating system or charging software as soon as there is enough battery power for operating system to run the charging software. The apparatus comprises: a power management unit (50) powered by the battery (24); and an auxiliary charge controller (52) powered by the battery (22) or by power from any one or more of the charging power sources (64); the method comprising the steps of: the auxiliary charge controller (52) generating a first wake signal (56, 58) upon detection of a charging voltage at any one or more of the charging power sources; the power management unit (50) booting or waking the operating system upon detection of the wake signal; and determining whether the operating system has woken or booted correctly; characterised by: upon determining a boot or wake failure of the operating system, the auxiliary charge controller (52) generating a second, periodic wake signal (50, 58, 56) until it is determined that the operating system has booted or woken correctly.

## Description

This invention relates to improvements in and relating to connections between mobile devices and charging power supplies.

Most portable electronic devices nowadays are battery-powered, that is to say, comprising an internal battery that needs to be charged regularly for the correct operation of the device. Charging is accomplished by forming an electrical connection between the battery and an external charging power supply, usually via a power jack. Historically, battery charging was achieved by connecting the battery, via a dedicated charging jack, to a charging plug of a mains-powered battery charger. Nowadays, however, most portable electronic devices, such as mobile telephones, tablet PCs, laptop computers and so on, are chargeable in several ways. For example, it is relatively common for a portable electronic device to have a universal serial bus (USB) port that can be used to provide a combined data and power interface for an external device, and charging can be accomplished by drawing electrical current from the USB port to recharge the battery.

The provision of multiple power inputs poses a number of technical issues, one of which being how to correctly route power within the device from the active power source (e.g. DC-in or USB) to the battery. This particular problem is addressed by using a power management unit (PMU), usually in the form of an integrated circuit (IC) that monitors the charge state of the battery and which monitors the voltages at the various available power sources. When the battery charge level drops below a certain threshold value, and/or when a charging voltage is detected, the PMU operates to connect the battery to the most appropriate power source to re-charge the battery. In many cases, the PMU IC is configured, using software; or firmware run on microcontroller inside the power management unit, or via the application software programmable via a serial bus, to regulate the charging current and/or voltage to achieve optimal charging, for example, the most rapid charge and/or the most complete charge.

The PMU can thus be configured to operate differently depending on the instantaneous charge state of the battery, for example, to adopt an aggressive, rapid-charging regime when the battery charge level is low, or to adopt a trickle charge regime, to achieve the maximum possible charge state, when the instantaneous battery charge level exceeds a certain threshold. The operation of PMUs in such a manner is well known.

Also, most portable electronic devices additionally comprise battery charging hardware that provides a failsafe for occasions when the PMU is inactive. Such a situation can arise when, say, the battery charge level has fallen so low that insufficient residual power remains to power the PMU and/or its software. When charging in "hardware" mode, the hardware charging circuitry effectively shunts the power, albeit with limited regulation to ensure safe charging, but not necessarily optimal charging, from the power source to the battery and monitors the battery's charge state, temperature etc., and when the battery reaches a desired charge level, or if the battery's operating parameters (e.g. temperature) go outside acceptable thresholds, the charging ceases. Whilst hardware charging provides some basic and safe charging functionality, it usually sub-optimally charges the battery, for example, slower that might have been possible with software control. In addition, hardware charging mode is generally undesirable as charging is often the only active function of the device, that is to say, the device's operating system is not booted to hibernate mode, which means that the device cannot be woken quickly by user intervention, nor are its features available until a user actively boots the device. In addition, when charging in hardware mode, a user is unable to monitor charging progress, as she or he would be able to do if charging were controlled using software, for example, there would be no animated battery icon on the device's display screen.

Existing technology works well where there are only two charging options, for example, DC-in and USB, but where auxiliary charging methods are to be employed, such as the provision of an auxiliary charging source, say, wireless charging, existing PMUs do not have sufficient spare pins available to detect voltage changes or wake-up signals from auxiliary sources. One solution would be to simply connect the auxiliary charging inputs to a single power-in pin of the PMU, but this would not provide adequate levels of control of the routing of power, as it is possible that a device may be connected to DC-in and USB simultaneously, and such a solution would not allow the PMU to manage the flow of power from both sources simultaneously. Also, there is the possibility that the device could be connected to more than one possible power source simultaneously, such as a powered USB cable and a charger, in which case, the device would need to decide which power source to use. In this example, say, using VBUS detection to select a data connection from the USB port and power from the charging plug.

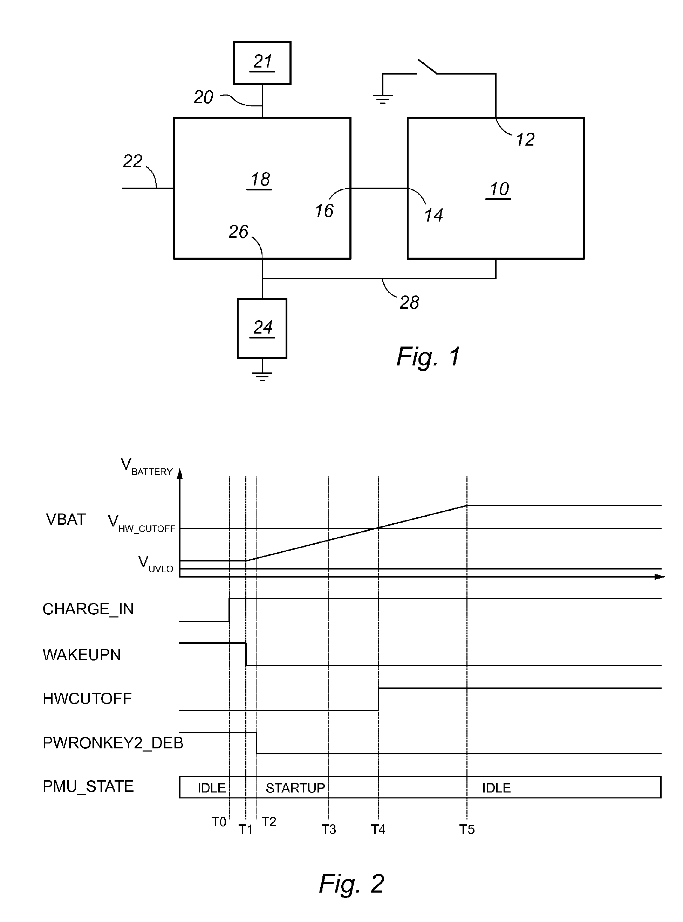

It is therefore proposed to provide signalling from the charging IC that interfaces with standard mobile platform PMU IC to manage the flow of power within the device. Such a configuration is shown in Figure 1 of the accompanying drawings.

In Figure 1, a PMU IC 10 has two "power-on" pins 12, 14 that are used to wake up the device. Pin 12 is designated POWERONKEY1 and is used to detect when the device's power key button is pressed. Pin 14 designated POWERONKEY2 is ordinarily designated for another power key button or wake-up signal from a near field communication transceiver or similar. However, pin 14 is usually configured to check the battery level only once, thus making it suitable for direct conversion to a charger IC connection pin. In the invention, however, pin 14 interfaces via a battery charger IC 18 and is used to wake-up the device when the connection of charger is detected.

The PMU IC 10 is connected, via pin 14, to the "wake up" pin 16 of a battery charger IC 18. The operation of the battery charger IC 18 is controlled via a serial interface 20 from the application processor 21 and is configured to switch power between a "charge in" pin 22 and the battery 24, via a "DC-out" pin 26. Thus, when a charger is connected to pin 22, the application processor 21 is configured to register this and to divert power from the charge in pin 22 to the battery 24. The charging of the battery 24 is controlled by software on the application processor 20. The auxiliary charger IC 18 is also configured to carry out hardware charging. For example, following a 100ms delay after detection of charger connection in which the charging software fails to boot, the auxiliary charger IC 18 can be configured to commence charging in hardware mode)

At the same time, a wake up pulse is sent from pin 16 of the battery charger IC 18 to the second power on pin 14 of the PMU IC 10 to wake up the device. This is accomplished by using an edge sensitive power on key 14, which is configured to detect the trailing edge of the pulse, from pin 16, or another power-on event, such as a mechanical key press or a signal from another IC.

The existing solution shown in Figure 1 has a number of problems. It will be noted, from Figure 1, that the battery 24 is used to power the PMU IC 10 via a power line 18, but when the battery charge is low, there may be insufficient power for the PMU IC 10 to operate. Specifically, when the charger is first connected to pin 22 of the battery charger IC 18, the wake up pulse sent from pin 16 of the battery charger IC 18 to the second power on pin 14 of the PMU IC 10 will go undetected if the PMU is not powered-up when the pulse is sent. Thus, the PMU will not detect the connection of the charger and charging will proceed in hardware mode. Alternatively, in the known system, the power management unit may detect the power on event but will not trigger the platform start-up procedure because there is not enough energy in battery for the software to operate. This problem arises because the battery voltage measurement is carried out only once per power-on event in known systems. Thus, as previously stated, hardware mode charging is undesirable because the user of the device may not see any response from the device, such as text on the device's screen or a blinking LED, when the charger is connected, and may therefore conclude that the charger or mobile terminal is broken.

The situation where the connection of a charger to the device is not detected is shown in Figure 2 of the drawings, in which:
At T0, the charger is connected to battery charger IC input, but the battery charge level is below the hardware cut-off level (HWCUTOFF), meaning that there is insufficient charge in the battery to start-up the platform.
At T1, after debouncing the charger connection, charging starts in hardware mode and pin 16 (WAKEUPN) is driven to low to indicate that the charger has been connected.
At T2, the pulse at pin 14 (PWRONKEY2_DEB) of the PMU IC 10 is debounced thereby triggering PMU start-up.
At T3, however, PMU start-up is aborted due to low battery: the detected battery charge level being below VHW_CUTOFF, the voltage threshold below which hardware charging takes place. Alternatively, the application processor could be woken, but its software powers down the platform due to low battery, the detected battery charge being below VSW_CUTOFF, that is, the threshold charge level above which software charging mode is possible. Notably, the values of VHW-CUTOFF and VSW_CUTOFF may not be the same, thus giving rise to the above two possible scenarios.
At T4, the battery charge level is above VHW_CUTOFF, that is to say, that the battery charge level is high enough to power-on the device. However, since the PWRONKEY2_DEB pulse at pin 14 has already been missed, there is no trigger to boot the device, and so charging continues in hardware mode with the device powered down.
At T5, charging in hardware mode is terminated as the battery charge level exceeds an upper threshold value set by the hardware charging circuit. For safety reasons, the hardware upper charge threshold value may not be as high as the equivalent software charging mode value, and so the battery could be full, although the charging cycle may have been longer than it might have been under software control. As previously stated, hardware charging may terminate the charging cycle prematurely, say after a pre-determined interval, or upon detection of other events, such as the user un-plugging the charger.

A need therefore exists for a new, improved or alternative charging system that addresses one or more of the above problems.

According to a first aspect of the invention, there is provided an apparatus for connecting a battery to one or more of a plurality of charging power sources in a portable electronic device, the apparatus comprising: a power management unit powered by the battery; and an auxiliary charge controller powered by the battery or power from any one or more of the charging power sources; the power management unit being configured boot or wake an operating system of the device in response to detection of a wake signal; and the auxiliary charge controller being operatively connected to the power management unit and configured generate a first wake signal upon detection of a charging voltage at any one or more of the charging power sources. the auxiliary charge controller is further configured to generate a second, periodic wake signal following detection of the said charging voltage at the said charging power source.

A second aspect of the invention provides a method of waking or booting an operating system of a battery-powered electronic device upon detection of a charging voltage at any one or more of the device's charging power sources, the device comprising: a power management unit powered by the battery; and an auxiliary charge controller powered by the battery or by power from any one or more of the charging power sources; the method comprising the steps of: the auxiliary charge controller generating a first wake signal upon detection of a charging voltage at any one or more of the charging power sources and the power management unit booting or waking the operating system upon detection of the wake signal; and determining whether the operating system has woken or booted correctly; wherein, upon determining a boot or wake failure of the operating system, the auxiliary charge controller generating a second, periodic wake signal until it is determined that the operating system has booted or woken.

The invention therefore provides a method to connect an auxiliary charger IC to a mobile platform chipset so that a charger connection wakes up the power management unit, operating system or charging software as soon as there is enough battery power for the operating system to run the charging software.

In the context of the present invention, the operating system may be an operating system of the device itself that provides software charging control functionality, or it may be a dedicated operating system or firmware of the charging circuitry, separate from the device's main operating system. In either case, the term "operating system" is intended to indicate software or firmware capable of implementing software-monitored and -controlled charging of the battery.

Thus, the invention provides a secondary, periodic, wake signal for the power management unit of the battery-powered electronic device that is configured to repeatedly attempt to wake or boot the operating system until such time as waking or booting has been detected. Such a configuration suitably addresses the problem of boot or wake failures occurring due to low battery status because waking or booting will be re-attempted at intervals until, eventually, the charge status of the battery is sufficiently high to allow the operating system to wake or boot correctly. Advantageously, the invention provides an apparatus, method or system to minimises the duration of hardware charging mode since, even if hardware charging is used initially, as soon as the battery charge level is high enough to support software control of the charging process, the device can transition from hardware charging mode to software charging mode, thus improving user experience and allowing the battery to be recharged optimally, that is to say, under software control.

The portable electronic device is suitably a battery-powered device, such as a mobile telephone, portable computer, camera or any other battery-powered electronic device having a built-in or internal battery. The power management unit and auxiliary charge controller suitably comprise integrated circuits. The auxiliary charge controller is suitably operatively connectable to a plurality of power sources, for example, a power jack, the power pins of a USB port, the terminals of a wireless charging induction loop and the like. The auxiliary charge controller suitably provides an interface between the plurality of charging power sources and the power management unit, which in certain embodiments of the invention, enables an existing power management unit, having a limited number of power-in connector pins, to be operatively connected to, and detect charging voltages at, a plurality of charging power sources. Thus, in certain embodiments of the invention, it is possible to expand on the charging power options of the device without having to design and implement a new power management unit IC.

The power management unit is configured boot or wake an operating system of the device in response to detection of a wake signal. The power management unit suitably comprises a first wake signal pin, which is operatively connectable to a pin of the auxiliary charge controller via which the first and/or second wake signal is output, and optionally, a second wake signal pin, which may be operatively connectable to, say, power button of the device that a user can press to boot or wake the device. Thus, the device can be booted or woken by user intervention, for example, depressing the power key, or by software intervention, that is to say, detection of a charging voltage at any one of more of the charging power sources.

The first wake signal is suitably a step-change voltage, which may be driven high upon detection of a charging voltage, followed by being driven low a time thereafter, or vice-versa. The power management unit suitably comprises an edge detect circuit adapted to detect the falling (or rising) edge of the voltage at the wake-up pin.

The auxiliary charge controller is configured to generate a second, periodic wake signal following detection of the said charging voltage at the said charging power source. The second periodic wake signal is suitably generated by a clock circuit, for example, a circuit comprising an oscillator.

A preferred embodiment of the invention shall now be described, by way of example, only, with reference to the accompanying drawings, in which:
Figure 1 is a schematic of a known auxiliary battery charger IC connected to mobile platform PMU;
Figure 2 is a representation of the voltages and signals at the various pins of the system of Figure 1;
Figure 3 is a schematic of an auxiliary battery charger and PMU in accordance with the invention;
Figure 4 is a representation of the voltages and signals at the various pins of the system of Figure 3; and

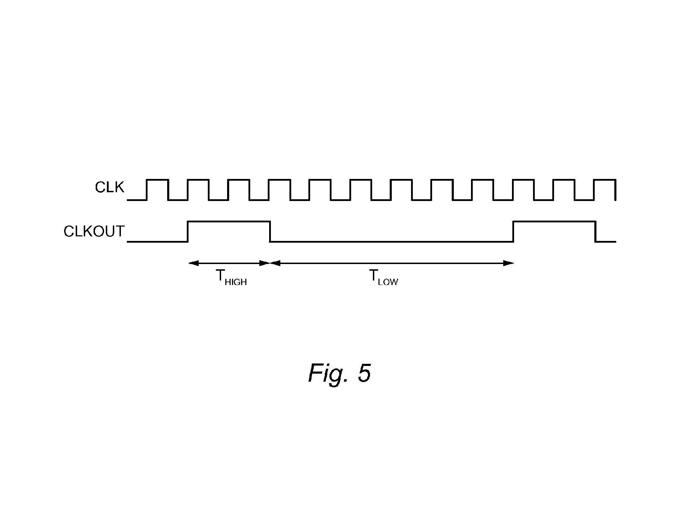

Figure 5 is a representation of an example waveform from a clock generator that can be used to drive wake up signal, which can also correspond to the second, periodic wake signal.

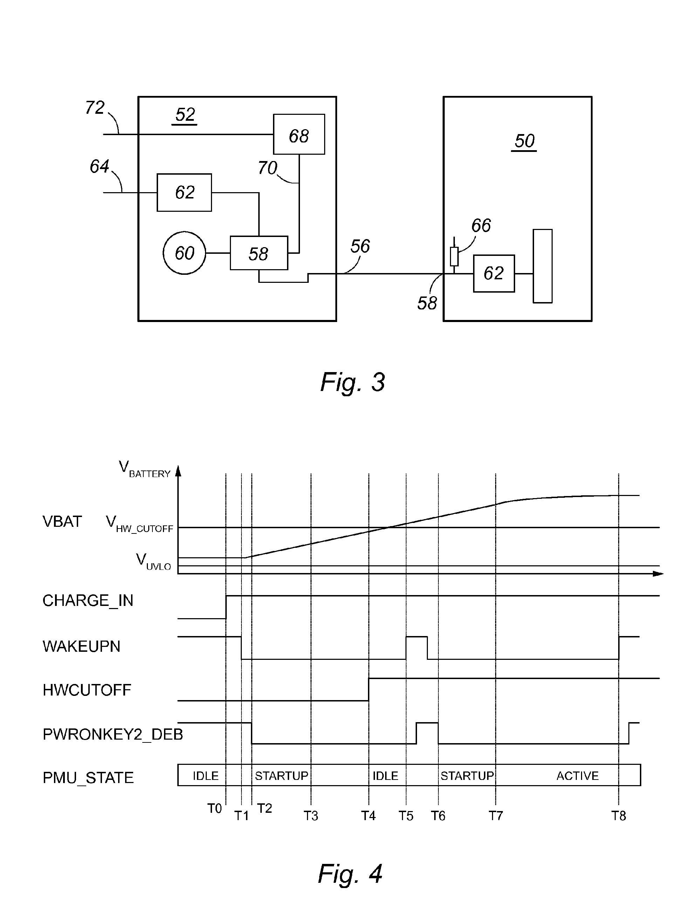

In Figure 3, a power management unit 50 is connected to an auxiliary charge controller 52 in a similar manner to that described in relation to Figure 1. The power management unit 52 has a wake-up pin 54 that is connected to the wake-up signal output pin 56 of the auxiliary charge controller 52 such that detection of a rising or falling edge wake-up signal at pin 54 causes the power management unit to attempt to boot the device's operating system.

Unlike the known example previously described, the auxiliary charge controller 52 additionally comprises a clock generator circuit 58 driven by an oscillator 60, and a debounce circuit 62 interposed between the charging power supply pin 64. Pin 56 is pulled up to the positive supply voltage 66 by the power management unit 50.

Connection of a charging voltage at pin 64 of the auxiliary charge controller 52 initiates debouncing 62, and once a connection has been validated, the clock generator 58 is enabled to generate clock signal at pin 56, which is used to drive down the voltage at pin 56. The clock generator 58 receives an input clock signal from the internal oscillator 60 or from an external source and the output of the clock generator 58 is a divided clock signal that may have different duty-cycle than that of the input clock. Figure 4 shows an example waveform for the clock generator, with possible values for T_{LOW} and T_{HIGH} being, for example, 700ms and 300ms, respectively.

Therefore, the voltage a pin 56 is driven low upon connection of a charger to pin 64, which, if the battery charge level is sufficiently high, will initiate the boot or wake-up of the operating system, as determined by the power management unit 50. However, if the battery charge level upon connection of the charging voltage is insufficiently high to enable the operating system to boot or wake correctly, the signal at 56 will go high after an interval (T_{HIGH}), and then low again for an interval (T_{LOW}). The transition of the voltage from high to low or vice-versa is detectable at pin 54 by the power management unit 50, thus enabling a re-boot attempt, in this example, every 1000ms. This process will be repeated until such time as there is sufficient power in the battery for the power management unit 50 to wake or boot the operating system and control the charging in software mode.

Such a configuration ensures that the power management unit will boot or wake the device as soon as the battery has been charged over the cut-off threshold, which enables the charging software to take-over from the hardware charging mode to enable more rapid, more controlled and safer charging of the battery.

It will be noted that the auxiliary charge controller additionally comprises a circuit 68 for detecting whether the operating system is active, and upon such detection, interfaces with the clock generator 58, via control line 70 to disable the clock generator. The function of disabling the clock generator 58 upon detection of correct booting or waking of the software is twofold: firstly, it prevents the power management unit from detecting the wake-up signal as a re-boot signal, which might result in endless, and needless re-booting of the operating system, and secondly, it removes the now superfluous wake-up signal, which may otherwise interfere with the correct operation of the device. Disabling the wake-up signal pulsing can be readily accomplished via a serial interface 72 between the operating system and the auxiliary charge controller 52.

The operation of the invention is shown schematically in Figure 4 of the drawings:
At T0, the battery charge level is the hardware charging threshold value, which means that there is insufficient available power to boot or wake the device. At T0, the charger is connected to pin 64 of the auxiliary charging controller 52.
At T1, and after debouncing the charger connection to verify that a charger has, in fact, been connected, charging begins in hardware mode and the wake-up signal at pins 56 and 54 is driven low to indicate charger connection.
At T2, the signal at pin 54 is debounced 62 and power management unit wake or boot is triggered.
At T3, booting or waking is aborted because the battery charge level is still below the hardware cut off threshold value (VHW_CUTOFF). Alternatively, the operating system is initially booted or woken but then powered-down due to detection of the battery charge level being below the software cut-off threshold value (VSW_CUTOFF).
At T4, the battery charge level is above the threshold values to boot or wake the operating system, but this does not, in and of itself, trigger a boot or wake sequence and so charging continues in hardware mode.
At T5, that is to say, after a T_{LOW} interval, the auxiliary charge controller 52 sets the wake-up signal at pin 56 back to high.
At T6, after a T_{HIGH} interval, pin 56 is driven low again, thus generating the falling edge that the power management unit 50 is configured to detect as a wake-up signal. The wake-up signal at pin 54 is debounced 62 for verification purposes, and after verification, the power management unit 52 begins the boot or wake sequence.
At T7, it will be noted that start-up was successful because the battery voltage is high enough (that is to say, above HWCUTOFF) and the state of the power management unit or the software does not power-down the device. Software charging mode therefore replaces hardware charging mode thus setting the charging parameters to optimal values to maximize the user experience and battery safety.
At T8, the software or operating system deactivates the oscillator 60 and/or clock generator 58 via the serial connection 72 previously described.

One possible advantage of the invention is that the hardware charging-to-software charging transition resides at the system level, rather than at the implementation level. Additionally, the invention affords the option to add an additional, auxiliary charging module to existing power management units to establish a rapid way to adjust the mobile terminal charging capabilities to match the changing requirements by markets. In other words, rather than having to modify the entire power management unit each time a new charging technology or implementation is developed, it is possible simply to upgrade or modify the auxiliary charging module, which can rationalise IC design going forward.

The invention is not restricted to the specific details of the foregoing embodiment, which is merely exemplary of the invention. It will also be appreciated that the foregoing description has been greatly simplified to aid understanding the invention and that various components of the device, power management unit or auxiliary charging module may have been omitted for simplicity, or their functionality described without specific reference to various sub-circuits.

## Claims

1. An apparatus for connecting a battery to one or more charging power sources in a portable electronic device, the apparatus comprising:
a power management unit powered by the battery; and
an auxiliary charge controller powered by the battery or by any one or more of the charging power sources;
the power management unit being configured to boot or wake an operating system of the device in response to detection of a wake signal; and
the auxiliary charge controller being operatively connected to the power management unit and configured to generate a first wake signal upon detection of a charging voltage at any one or more of the charging power sources; **characterized in that**
the auxiliary charge controller is configured to generate a second, periodic wake signal following detection of the said charging voltage.

2. An apparatus according to claim 1, wherein the operating system comprises any one or more of the group comprising: an operating system of the device comprising charging control functionality; and a dedicated operating system or firmware of the charging circuitry, separate from the device's main operating system.

3. An apparatus according to any preceding claims, wherein either or both of the power management unit and auxiliary charge controller comprise integrated circuits.

4. An apparatus according to any preceding claim, wherein the power management unit comprises a first wake signal pin, which is operatively connectable to a pin of the auxiliary charge controller via which the first and/or second wake signal is output.

5. An apparatus according to any preceding claim, wherein the power management unit comprises a second wake signal pin operatively connectable to a power button of the device.

6. An apparatus according to any preceding claim, wherein the first wake signal comprises a step-change voltage and wherein the power management unit comprises an edge detection circuit adapted to detect the falling, or rising, edge of the voltage at the wake-up pin.

7. An apparatus according to any preceding claim, wherein the second, periodic wake signal is generated by a clock generator circuit.

8. An apparatus according to claim 7, wherein the clock generator circuit comprises any one or more of the group comprising: an internal oscillator; an external oscillator; means for dividing the clock signal to produce a clock signal having a different duty cycle to that of the oscillator; a clock generator circuit configured to generate alternating high and low voltages separated by step transitions; a clock generator circuit configured to generate alternating high and low voltages separated by step transitions, the duration of the high and low voltages being different; a clock generator circuit configured to generate alternating high and low voltages separated by step transitions, the duration of the high voltages being substantially 300ms; and a clock generator circuit configured to generate alternating high and low voltages separated by step transitions, the duration of the low voltages being substantially 700ms.

9. An apparatus according to any preceding claim, wherein either or both of the auxiliary charging controller and power management unit comprises a debouncing circuit.

10. An apparatus according to claim 8 or 9, wherein the wake up signal pin of the power management unit is pulled up to the positive supply voltage by the power management unit, and/or is pulled low by the wake-up signal outputted by the clock generator circuit.

11. An apparatus according to any preceding claim, wherein the auxiliary charging controller additionally comprises means for detecting whether the operating system is active, and upon such detection, interfaces with the clock generator to disable the clock generator.

12. An apparatus according to claim 11, wherein the means for detecting comprises a circuit of the auxiliary charge controller operatively connected to an operating system of the device via a serial interface.

13. A method of waking or booting an operating system of an electronic device upon detection of a charging voltage at any one or more of the device's charging power sources, the device comprising:
a power management unit powered by the battery; and
an auxiliary charge controller powered by the battery or by power from any one or more of the charging power sources; the method comprising the steps of:
the auxiliary charge controller generating a first wake signal upon detection of a charging voltage at any one or more of the charging power sources;
the power management unit booting or waking the operating system upon detection of the wake signal; and
determining whether the operating system has woken or booted correctly; **characterized by**:
upon determining a boot or wake failure of the operating system, the auxiliary charge controller generating a second, periodic wake signal until it is determined that the operating system has booted or woken correctly.

14. A method according to claim 13, comprising the steps of: applying a charging voltage at one of the charging power sources whilst the battery charge level is below a threshold value for booting or waking the device; debouncing the charger connection and verifying that a charger has, in fact, been connected; commencing charging in hardware mode and producing a first wake signal to indicate charger connection; debouncing the first wake signal to trigger waking or booting of the operating system; aborting the wake or boot sequence if the battery charge level is below a cut-off threshold value; the auxiliary charge controller then emitting a second, periodic wake-up signal; the power management unit debouncing the second, periodic wake-up signal and re-attempting to wake or boot the operating system until the battery charge level is above the said cut-off threshold values; and upon successful waking or booting of the operating system, terminating the second, periodic wake-up signal.
